# EUROPEAN PATENT APPLICATION

(11) **EP 3 361 464 A1**
(43) Date of publication of application: **15.08.2018**
(21) Application number: 16863959.9
(22) Date of filing: 18.10.2016
(51) Int. Cl.: G08B 25/04, G08B 21/02

(54) **PERSON MONITORING DEVICE AND METHOD, AND PERSON MONITORING SYSTEM**

(30) Priority: 09.11.2015 JP 2015219309
(71) Applicant: Konica Minolta, Inc., Tokyo 100-7015 (JP)
(72) Inventor: TSUJI, Aki, Tokyo 100-7015 (JP); NODA, Atsuhiro, Tokyo 100-7015 (JP); YAMASHITA, Masanori, Tokyo 100-7015 (JP)
(74) Representative: Hoffmann Eitle
(86) International application number: PCT/JP2016/080767
(87) International publication number: WO 2017/081995

(57) **Abstract**

In a subject observation unit and a subject observation method according to the present invention, a predetermined movement of a subject to be observed is detected, and it is determined based on the detected predetermined movement and a specified parameter whether or not the predetermined movement of the subject indicates an abnormality. In the subject observation unit and the subject observation method, specified circumstances in connection with the specified parameter are detected, and a value of the specified parameter is obtained based on the detected specified circumstances, the obtained value of the specified parameter being stored in a parameter information storage part as the specified parameter to be used for determination of the abnormality.

## Description

### Technical Field

The present invention relates to a subject observation unit and a subject observation method for observing a subject as a watching target to be observed, and a subject observation system adopting the subject observation unit.

### Background Art

Our country, Japan, has been experiencing an aging society, particularly, a super aging society where an aging rate of the population aged 65 and older to the total population exceeds 21 % because of improvements in living standards, sanitary conditions and medical levels accompanying with the rapid economic growth after the war. The population aged 65 and older is expected to reach approximately 34,560,000 to the total population of 124,110,000 in 2020, while the population aged 65 and older was approximately 25,560,000 to the total population of approximately 127,650,000 in 2005. This aging society is expected to have a greater number of nursing or care needers (nursing needers or the like) due to illnesses, injuries or aging than a non-aging society. Moreover, our country also has been experiencing a declining-birth rate society, for example, the total fertility rate was 1.43 in 2013. This has also caused a problem of "care of an elderly person by another elderly person", which means that an elderly person who requires nursing or care has to be taken care of by an elderly family member such as a spouse, child, or sibling.

The nursing needers or the like enter hospitals or facilities like welfare facilities (including short-stay facilities, care homes, intensive care homes, and the like referred by Japanese statutory laws) for the elderly, and receive nursing or care. These facilities face risks that nursing needers or the like get injuries by falling down from beds or falling over during walking, or loiter after sneaking out of the beds. In consideration that it is necessary to eliminate the risks as soon as possible and that the risks may lead to more serious problems if being left without any countermeasures, nurses and caregivers or the like confirm the safety or check the state of each of the nursing needers or the like through regular patrols.

However, the nursing and care industries encounter a problem of chronic labor shortage due to a slower increase in the number of nurses or the like than in the number of nursing needers or the like. Furthermore, compared with the day time, a workload per nurse or caregiver is much heavier during the semi-night time and the night time because of a decrease in the number of nurses or caregivers during those times. Hence, there has been a demand of reduction in the workload. Moreover, the aforementioned problem of "care of an elderly person by another elderly person" is seen in the facilities as well without exception, i.e., it is often recognized that an elderly nurse or the like has to take care of an elderly care needer or the like. Generally, as one gets older, his or her physical strength declines. This means that the nursing workload is harder for an older nurse than for a younger nurse regardless of his or her good health, and the older nurse is considered to delay in movement or judgment.

In order to alleviate the labor shortage and the workload of the nurses or the like, technologies of supporting the nursing and caring workloads have been demanded. In response to this demand, subject observation apparatuses have been recently researched and developed to observe (monitor) a subject as a watching target, such as a nursing needer or the like, to be observed.

The technologies involve a medical movement detection apparatus disclosed in Patent Literature 1. The medical movement detection apparatus disclosed in Patent Literature 1 includes: one or more photographing parts (1) arranged at one or more different positions for photographing a care receiver G at one or more different angles; a region setting part (3) which can set a plurality of arbitrary detection regions (A) for an image of the care receiver G to be photographed by the photographing part (1); a threshold setting part (4) for adjustably setting a threshold of a change to occur in a part of the image as a reference to be used for determination of an occurrence of an abnormality to the care receiver G in the detection regions (A) set by the region setting part (3); an abnormality detection part (2) for detecting based on the threshold set by the threshold setting part (4) whether or not the abnormality has occurred in the detection regions (A) set by the region setting part (3); and a communication part (16) for notifying based on the detection of the abnormality by the abnormality detecting part (2) the occurrence of the abnormality to a base station (23). Besides, regarding the detection region A, Patent Literature 1 discloses, in paragraph [0040], as follows: "a user designates an area on a screen as a detection region A having a given shape in accordance with a characteristic of a care receiver G by utilizing a pointing device such as a mouse". Further, regarding the threshold, Patent Literature 1 discloses, for example in paragraph [0046], as follows: "the slider 26 can continuously and adjustably set a threshold, and further the display region 27 is adapted for displaying a preview in which the threshold being selected is suited to an actual image".

Meanwhile, a person living alone is also a subject to be observed as well as the nursing needer or the like in terms of safety confirmation.

Incidentally, upon receipt of a notification of an abnormality from a subject observation unit, an observer executes an action, for example, goes to a location of a subject to be observed to whom the notification of the abnormality is directed. In this case, if a wrong notification is sent due to an erroneous determination on a normal state of the subject as indicating the abnormality, the action by the observer will result in vein and a waste of effort. Alternatively, if a notification failure occurs due to a missed detection of the abnormality by the subject observation unit, the notification failure may lead to the aforementioned serious problems. An occurrence of an error, such as the wrong notification or the notification failure, is significantly influenced by various individualities of subjects and different facility environments. Accordingly, subject observation units are required to be customizable suitably for the respective individualities of the subjects and the different facility environments.

The medical movement detection apparatus disclosed in Patent Literature 1 is adaptable to set a detection region and a threshold, and thus is customizable. However, in the medical movement detection apparatus disclosed in Patent Literature 1, a user sets the detection region and the threshold. That is, the user is required to set the detection region and the threshold by predicting a characteristic of the care receiver G. In this case, if the set detection region or threshold does not match an actual one, an error may occur and resetting may be required. Furthermore, a facility generally accommodates a plurality of subjects to be observed, and thus is required to be equipped with a plurality of apparatuses to be respectively allotted to the subjects. Hence, when adopting medical movement detection apparatuses like the one disclosed in Patent Literature 1, the user needs time and effort to set a detection region and a threshold for each of the apparatuses. Additionally, if a different subject is observed by the apparatus, a detection region and a threshold are set to wrong values, which rather results in an occurrence of an error.

### Citation List

### Patent Literature

Patent Literature 1: Japanese Unexamined Patent Publication No. 2005-128967

### Summary of Invention

The present invention has been accomplished in view of the above-described situations. An object of the present invention is to provide a subject observation unit and a subject observation method which are customizable owing to automatic setting of a parameter, and further a subject observation system adopting the subject observation unit.

In a subject observation unit and a subject observation method according to the present invention, a predetermined movement of a subject to be observed is detected, and it is determined based on the detected predetermined movement and a specified parameter whether or not the predetermined movement of the subject indicates an abnormality. Further, in the subject observation unit and the subject observation method, specified circumstances in connection with the specified parameter are detected, and a value of the specified parameter is obtained based on the detected specified circumstances, the obtained value of the specified parameter being stored in a parameter information storage part as the specified parameter to be used for determination of the abnormality. Therefore, the subject observation unit and the subject observation method according to the present invention are customizable owing to automatic setting of a parameter. Further, a subject observation system according to the present invention is one that adopts the above-described subject observation unit.

These and other subjects, features and advantages of the present invention will become more apparent upon reading the following detailed description along with the accompanying drawings.

### Brief Description of Drawings

FIG. 1 shows a configuration of a subject observation system according to an embodiment of the present invention.
FIG. 2 is a block diagram showing a configuration of a sensor unit according to a first embodiment.
FIG. 3 is a flowchart showing an operation of the sensor unit for setting a parameter in the first embodiment.
FIGS. 4A and 4B are diagrams each explaining a process of setting a parameter (process of setting a determination region) in the sensor unit according to the first embodiment.
FIG. 5 is a flowchart showing an operation of the sensor unit for detecting a movement in the sensor unit according to the embodiment.
FIG. 6 is a block diagram showing a configuration of a sensor unit according to a second embodiment.
FIG. 7 is a flowchart showing an operation of the sensor unit for setting a parameter in the second embodiment.

### Description of Embodiments

Hereinafter, an embodiment of the present invention will be described with reference to the accompanying drawings. Elements denoted by the same reference numerals in the drawings have the same configuration and, therefore, repeated descriptions will be appropriately omitted. In the present specification, elements are denoted by a same reference numeral when being referred to collectively, and are denoted by a same reference numeral accompanied by a different respective reference character when being referred to individually.

A subject observation system according to the embodiment includes: a subject observation unit which detects a predetermined movement of a subject as a watching target (supervising target) to be observed (supervised), and notifying an abnormality to an external device when the detected predetermined movement of the subject is determined to indicate the abnormality; and a terminal device communicatively connected with the subject observation unit to perform an output upon receipt of the abnormality notified by the subject observation unit. A subject observation unit for use in the subject observation system according to the embodiment includes: a parameter information storage part which stores a specified parameter to be used for determination whether or not a predetermined movement of the subject indicates an abnormality; a first detector which detects the predetermined movement of the subject; an abnormality determination part which determines based on the predetermined movement of the subject detected by the first detector and the specified parameter stored in the parameter information storage part whether or not the predetermined movement of the subject indicates the abnormality; a second detector which detects specified circumstances in connection with the specified parameter; and a parameter setting part which obtains a value of the specified parameter based on the specified circumstances detected by the second detector during a specified period, the obtained value of the specified parameter being stored in the parameter information storage part as the specified parameter to be used by the abnormality determination part. Hereinafter, the subject observation system and the subject observation unit will be described by using first and second embodiments.

### (First embodiment)

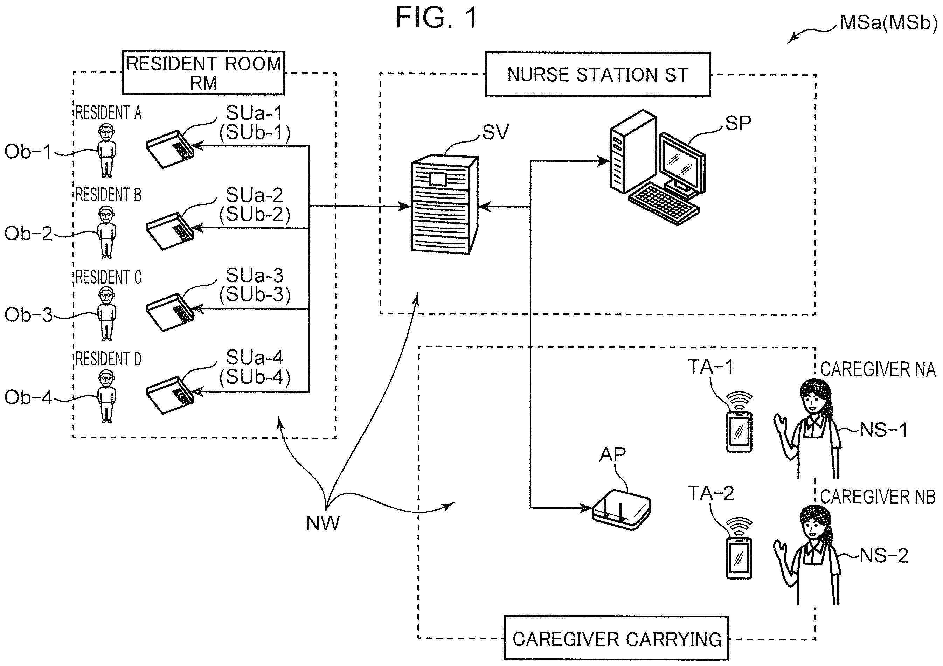

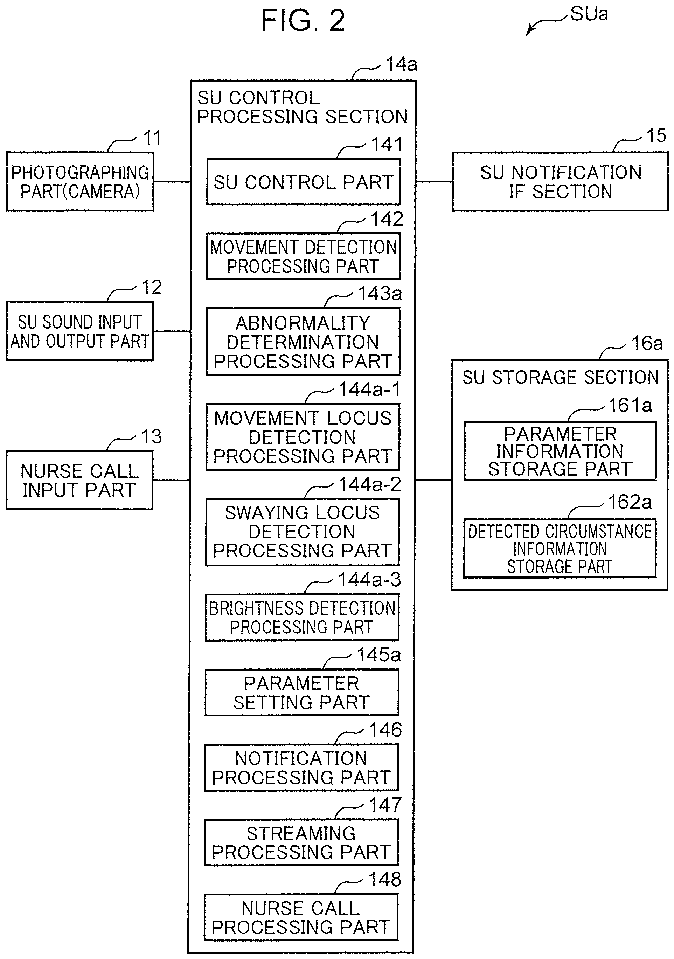

FIG. 1 shows a configuration of a subject observation system according to an embodiment of the present invention. FIG. 2 is a block diagram showing a configuration of a sensor unit according to a first embodiment.

Specifically, for example, as shown in FIG 1, a subject observation system MSa according to a first embodiment includes one or more sensor units SUa (SUa-1 to SUa-4), an administration server SV, a stationary terminal device SP and one or more mobile terminal devices TA (TA-1, TA-2), which are communicatively connected with one another via a wired or wireless network NW or communication line, such as a LAN (Local Area Network), a telephone network and a data communication network. The network NW may include a relay device, such as a repeater, bridge, rooter and cross connect, to relay a communication signal. In the embodiment shown in FIG. 1, the sensor units SUa-1 through SUa-4, the administration server SV, the stationary terminal device SP and the mobile terminal devices TA-1, T1-2 are communicatively connected with one another via a wireless LAN (such as a LAN satisfying IEEE802.11 standard) NW including an access point AP.

The subject observation system MSa is disposed at a location suitable for the subject Ob. The subject (supervising target) Ob may involve, for example, a person who requires nursing due to an illness or injury, a person who needs care due to reduction in the physical ability, and a person living alone. Particularly, the subject Ob is appreciated to require finding of a predetermined inconvenient incident, for example, an abnormality condition, happened to the subject in terms of achievement in early finding and quick action. For this reason, the subject observation system MSa is preferably disposed in a building, such as a hospital, a welfare facility for the elderly and a house, depending on a type of the subject Ob. In the embodiment shown in FIG 1, the subject observation system MSa is disposed in a care facility building provided with a plurality of chambers including resident rooms RM respectively for a plurality of subjects Ob to live therein, a nurse station, and other rooms.

Each of the sensor units SUa has a communication function to communicate with the other devices SV, SP, TA via the network NW, and serves as a device for detecting a predetermined movement of the subject Ob, and notifying an abnormality to the stationary terminal device SP and the mobile terminal device TA (terminal devices SP, TA) via the administration server SV when the detected predetermined movement of the subject Ob is determined to indicate the abnormality. The sensor unit SUa is an exemplary subject observation unit, and includes, for example as shown in FIG 2, a photographing part 11, a sensor sound input and output part (SU sound input and output part) 12, a nurse call input part 13, a sensor control processing section (SU control processing section) 14a, a sensor communication interface section (US communication IF section) 15, and a sensor storage section (SU storage section) 16a.

The photographing part 11 is connected to the SU control processing section 14a, and serves as a device for generating an image (image data) of a photographing target in accordance with a control of the SU control processing section 14a. The photographing part 11 is arranged at a high position in a space, that is, a locating space (e.g., the resident room RM representing an arrangement space in the embodiment shown in FIG 1) where a subject Ob who is a watching target to be observed is prospected to locate such that the locating space is observable, photographs the locating space from the high position as the photographing target, generates an image (image data) based on a view of the photographing target photographed at a high angle, and outputs the image of the photographing target to the SU control processing section 14a. In the embodiment, the photographing part 11 generates a still image and a video image. The photographing part 11 has a high probability of being able to photograph an entirety of the subject Ob, and thus is appreciated to be arranged in such a manner as to photograph the photographing target at a position right above a prospected head position (normally, a pillow position) at which the head of the subject Ob is prospected to locate on a sleeping equipment BT, e.g., a bed, where the subject Ob lies, the prospected head position being set in advance. Actually, the photographing part 11 is arranged at an appropriate position, for example, at a ceiling or a high position on a wall, depending on a size (dimension), shape and the like of a room.

In the embodiment, the photographing part 11 serves as a device for generating, for example, a visible light image. In the embodiment, the photographing part 11 is, for example, a digital camera including: an optical imaging system for forming an image by projecting an optical image based on visible light of a photographing target onto a predetermined imaging surface; an image sensor having a light receiving surface arranged to match the imaging surface to convert the optical image based on the visible light of the photographing target into an electric signal; and an image processor for generating image data serving as data representing the visible light image of the photographing target by means of image processing to an output from the image sensor. In the embodiment, the optical imaging system of the photographing part 11 is preferably of a wide angle optical type (such as a wide angle lens, including a fisheye lens) having a view angle adapted to photograph an entirety of the resident room RM in which the photographing part 11 is arranged.

Alternatively, the photographing part 11 may be a device for generating an infrared light image in such a manner that the subject Ob is observable even in a relatively dark situation. In this case, the photographing part 11 is, for example, a digital infrared camera including: an optical imaging system for forming an image by projecting an optical image based on infrared light of the photographing target onto a predetermined imaging surface; an image sensor having a light receiving surface arranged to match the imaging surface and converting the optical image based on infrared light of the photographing target into an electric signal; and an image processor for generating image data serving as data representing the infrared image of the photographing target by means of image processing to an output from the image sensor.

The sensor unit SUa is appreciated to further include a Doppler sensor in order to detect an abnormally irregular motion as one predetermined movement of the subject Ob. The Doppler sensor sends a transmission wave, receives a reflection wave of the transmission wave that is reflected from an object, and outputs a Doppler signal of a Doppler frequency component based on the transmission wave and the reflection wave. The frequency of the reflection wave shifts in proportion to a moving speed of the object during movement of the object owing to the Doppler effect, which causes a difference (Doppler frequency component) between the frequency of the transmission wave and the frequency of the reflection wave. The Doppler sensor generates a signal of the Doppler frequency component as a Doppler signal, and outputs the signal to the SU control processing section 14a. The transmission wave may be in the form of an ultrasonic wave or a microwave. However, the microwave is reflectable on a body surface of the subject Ob while passing through a wearing item of the subject Ob, and thus is more preferably reliable to detect a motion of the body surface of the subject Ob even in the wearing item. The SU control processing section 14a obtains a chest motion (i.e., shrinking and bulging motion of a chest) of the subject Ob who is breathing on the basis of the Doppler signal from the Doppler sensor, and judges the chest motion as the abnormally irregular motion when inspecting a disorder in the cycle of the chest motion or an amplitude indicating a predetermined threshold or smaller in the chest motion.

The SU sound input and output part 12 is connected to the SU control processing section 14a, and serves as a circuit for acquiring an external sound and inputting the acquired sound into the sensor unit SUa, and further generating and outputting a sound corresponding to a sound representative electric signal in accordance with control by the SU control processing section 14a. The SU sound input and output part 12 includes, for example, a microphone to convert a sound acoustic vibration to the electric signal, and a speaker to convert a sound electric signal to a sound acoustic vibration, and other elements. The SU sound input and output part 12 outputs an external sound representative electric signal to the SU control processing section 14a, and converts the electric signal input from the SU control processing section 14a to the sound acoustic vibration to thereby output the converted sound acoustic vibration.

The nurse call input part 13 is connected to the SU control processing section 14a, and serves as a switch circuit such as a push button switch for inputting a nurse call from the subject Ob to the sensor unit SUa. The nurse call input part 13 is appreciated to be connected to the SU control processing section 14a by a cable, or wirelessly connected thereto via the SU communication IF section 15.

The SU communication IF section 15 is connected to the SU control processing section 14a, and serves as a communication circuit for performing a communication in accordance with a control of the SU control processing section 14a. The SU communication IF section 15 generates a communication signal containing data input from the SU control processing section 14a for transfer in accordance with a communication protocol used in the network NW of the subject observation system MSa, and sends the generated communication signal to the other devices SV, SP, TA via the network. The SU communication IF section 15 receives a communication signal from the other devices SV, SP, TA via the network NW. The SU communication IF section 15 further takes data from the received communication signal, converts the taken data to another one having a different format that can be processed by the SU control processing section 14a, and outputs the converted data to the SU control processing section 14a. The SU communication IF section 15 is appreciated to further include an interface circuit for inputting and outputting data with an external device by adopting the Bluetooth (Registered Trademark) standard, the IrDA (Infrared Data Association) standard, the USB (Universal Serial Bus) standard, or the like.

The SU storage section 16a is connected to the SU control processing section 14a, and serves as a circuit for storing various predetermined programs and data in accordance with a control of the SU control processing section 14a. The various predetermined programs include control processing programs such as: an SU control program for controlling respective parts of the sensor unit SU in accordance with their functions; a movement detection processing program for detecting based on an image (target image) of a target region photographed by the photographing part 11 a predetermined movement of the subject Ob that is set in advance; a movement locus detection processing program for detecting a movement locus of the subject Ob as one specified circumstance based on the target image photographed by the photographing part11; a swaying locus detection processing program for detecting a swaying locus of a curtain as another one specified circumstance based on the target image photographed by the photographing part 11; a brightness detection processing program for detecting a brightness of each pixel of the target image photographed by the photographing part 11 as further another one specified circumstance; a parameter setting program for obtaining a value of a specified parameter to be used for determination whether or not the predetermined movement of the subject to be observed indicates an abnormality in accordance with results respectively acquired during a specified period under the movement locus detection processing program, the swaying locus detection processing program and the brightness detection processing program, and further causing the SU storage section 16a to store the obtained value of the specified parameter so as to be used under an abnormality determination processing program (by the abnormality determining processing part 143a) to be described next; the abnormality determination processing program for determining based on the predetermined movement of the subject Ob detected under the movement detection processing program and the specified parameter stored in the US storage section 16a whether or not the predetermined movement of the subject Ob indicates the abnormality; a notification processing program for notifying the abnormality determined under the abnormality determination processing program to an external device; a streaming processing program for distributing, by means of streaming, a video image photographed by the photographing part 11 to the stationary terminal device SP or the mobile terminal device TA having requested the video image; and a nurse call processing program for performing a voice communication with the stationary terminal device SP or the mobile terminal device TA by using the SU sound input and output part 12. The specified circumstances under the movement locus detection processing program, the swaying locus detection processing program and the brightness detection processing program serve as circumstances in connection with the specified parameter, and respectively represent the movement locus of the subject Ob, the swaying locus of the curtain, and the brightness of each pixel of the target image in the embodiment. In the embodiment, the specified parameter represents a determination region serving as a determination target for the determination whether or not the predetermined movement of the subject Ob indicates the abnormality. The various predetermined data contains data necessary for executing the respective programs, such as a sensor unit identifier (sensor ID) of the sensor unit SUa for specifying and identifying the sensor unit SUa, a communication address of the administration server SV, the specified parameter, and the circumstances in connection the specified parameter, and further data necessary for observation of the subject Ob. The SU storage section 16a includes, for example, a ROM (Read Only Memory) which is a nonvolatile storage element, an EEPROM (Electricly Erasable Programmable Read Only Memory) which is a rewritably nonvolatile storage element, and the like. The SU storage section 16a further includes a RAM (Random Access Memory) serving as a working memory of the control processing section 14a to store data generated during execution of the predetermined programs.

The SU storage section 16a is operably provided with a parameter information storage part 161a and a detected circumstance information storage part 162a for respectively storing the specified parameter and the circumstances in connection with the specified parameter. The parameter information storage part 161a stores the specified parameter (the determination region in the embodiment) to be used for the determination whether or not the predetermined movement of the subject Ob to be observed indicates the abnormality. The detected circumstance information storage part 162a stores the circumstances (the movement locus of the subject Ob, the swaying locus of the curtain, the brightness of each pixel of the target image in the embodiment) in connection with the specified parameter as the specified circumstances.

The SU control processing section 14a serves as a circuit for controlling the respective parts of the sensor unit SUa in accordance with their functions, acquiring a target image by causing the photographing part 11 to photograph the subject Ob from a position higher than the subject Ob, detecting a predetermined movement of the subject Ob based on the acquired target image, and sending an abnormality to the administration server SV in order to notify the abnormality to an external device when the detected predetermined movement of the subject Ob is determined as indicating the abnormality. The SU control processing section 14a includes, for example, a CPU (Central Processing Unit) and peripheral circuits therearound. The control processing section 14a is operably provided with a sensor control part (SU control part) 141, a movement detection processing part 142, an abnormality determination processing part 143a, a movement locus detection processing part 144a-1, a swaying locus detection processing part 144a-2, a brightness detection processing part 144a-3, a parameter setting part 145a, a notification processing part 146, a streaming processing part 147, and the nurse call processing part 148, owing to execution of the control processing programs.

The SU control part 141 controls the respective parts of the sensor unit SUa in accordance with their functions to thereby control the entirety of the sensor unit SUa.

The movement detection processing part 142 detects based on a target image photographed by the photographing part 11 a predetermined movement of the subject Ob that is set in advance. In the embodiment, the predetermined movement includes, for example, waking-up movement, leaving movement from a bed, falling over, and falling down of the subject Ob. Specifically, the movement detection processing part 142 detects, for example, a head of the subject Ob based on the target image photographed by the photographing part 11, and detects the waking-up movement, the leaving movement from the bed, the falling over, and the falling down of the subject Ob in accordance with a time change in a size of the detected head of the subject Ob. More specifically, the SU storage section 16a stores in advance, as pieces of the various predetermined data, a locating area of a sleeping equipment BT, a first threshold Th1 for distinguishing a size of the head in a lying posture and that in a sitting posture from each other in the locating area of the sleeping equipment BT, a second threshold Th2 for identifying a size of the head in a standing posture or not within the resident room RM except for the locating area of the sleeping equipment BT, and a third threshold Th3 for identifying a size of the head in the lying posture or not within the resident room RM except for the locating area of the sleeping equipment BT. The movement detection processing part 142 firstly extracts a moving body region as a person body region of the subject Ob from the target image by means of, for example, a background subtraction way or a frame subtraction way. Subsequently, the movement detection processing part 142 extracts, from the extracted moving body region, a head area of the subject Ob by means of, for example, a Hough transform of a circle or an elliptical oval, pattern matching using a head model prepared in advance, or a neural network based on learning for the detection of the head. After that, judging from the position and the size of the extracted head, the movement detection processing part 142 detects the waking-up movement, the leaving movement from the bed, the falling over and the falling down. In one example, the movement detection processing part 142 judges the waking-up movement in accordance with a time change in the size of the extracted head from the lying posture to the sitting posture by using the first threshold Th1 when the position of the extracted head falls within the locating area of the sleeping equipment BT, and detects the waking-up movement in this way. In another example, the movement detection processing part 142 judges the leaving movement from the bed in accordance with a time change in the size of the extracted head from a certain posture to the standing posture by using the second threshold Th2 when the position of the extracted head deviates from the locating area of the sleeping equipment BT to the outside thereof, and detects the leaving movement from the bed in this way. In further another example, the movement detection processing part 142 judges the falling down in accordance with a time change in the size of the extracted head from a certain posture to the lying posture by using the third threshold Th3 when the position of the extracted head deviates from the locating area of the sleeping equipment BT to the outside thereof, and detects the falling down in this way. In still further another example, the movement detection processing part 142 judges the falling over in accordance with a time change in the size of the extracted head from a certain posture to the lying posture by using the third threshold Th1 when the position of the extracted head falls within the resident room RM except for the locating area of the sleeping equipment BT, and detects the falling over in this way.

The movement locus detection processing part 144a-1 detects a movement locus of the subject Ob as one of the specified circumstances based on a target image photographed by the photographing part 11, and the detected circumstance information storage part 162a stores the detected movement locus of the subject Ob. Specifically, the movement locus detection processing part 144a-1 extracts a moving body region as a person body region of the subject Ob from the target image photographed by the photographing part 11 by means of, for example, the background subtraction way or the frame subtraction way, detects a specified point (including, for example, a center of the moving body region, or a central point of a circumscribed circle coming into external contact with the moving body region) in the extracted moving body region as one movement locus, and the detected circumstance information storage part 162a stores the detected movement locus of the subject. Besides, the movement locus detection processing part 144a-1 is appreciated to further extract the head area of the subject Ob from the extracted moving body region by the above-described way, and detect a specified point (including, for example, a center of the head area, or a central point of a circumscribed circle coming into external contact with the head area) in the extracted head area as another movement locus of the subject Ob. Moreover, the movement locus detection processing part 144a-1 executes the process for each specified sampling interval (e.g., each one frame, each two or more frames, or the like) during a specified period. As a result, the detected circumstance information storage part 162a stores a collection of movement loci (a collection of specified points) of the subject Ob. The specified period may be any period, for example, a period of four to seven days suitable for grasping daily movement patterns of the subject Ob.

The swaying locus detection processing part 144a-2 detects a swaying locus of a curtain as another one of the specified circumstances based on the target image photographed by the photographing part 11, and the detected circumstance information storage part 162a stores the detected swaying locus of the curtain. Specifically, the SU storage section 16a stores a position of a window in the resident room RM as a piece of the various predetermined data in advance. The swaying locus detection processing part 144a-2 firstly extracts a swaying body region (moving body region) around the position of the window (a swaying body region within a predetermined distance, such as around 30 cm to 100 cm, from the position of the window) as a curtain region by means of, for example, the background subtraction way or the frame subtraction way. Subsequently, the swaying locus detection processing part 144a-2 detects an outline of the swaying body region (an outline of the curtain region) as one swaying locus of the curtain by means of, for example, edge filtering or the like. The detected circumstance information storage part 162a stores the detected swaying locus of the curtain. Also, the SU storage section 16a stores a color of the curtain as a piece of the various predetermined data in advance, and the curtain region and the outline thereof may be obtained based on the color of the curtain. The swaying locus detection processing part 144a-2 executes the process for each specified sampling interval (e.g., each one frame, each two or more frames, or the like) during a specified period. As a result, the detected circumstance information storage part 162a stores a collection of swaying loci of the curtain (a collection of outlines). The specified period may be any period, for example, a period of four to seven days suitable for grasping swaying patterns of the curtain.

The brightness detection processing part 144a-3 detects a brightness of each pixel of the target image photographed by the photographing part 11 as further another one of the specified circumstances, and the detected circumstance information storage part 162a stores the detected brightness of the each pixel of the target image. The brightness detection processing part 144a-3 executes the process for each specified sampling interval (e.g., each one frame, each two or more frames, or the like) during a specified period. As a result, the detected circumstance information storage part 162a stores a collection of the brightness of respective pixels of a plurality of target images. The specified period may be any period, for example, a period of four to seven days suitable for grasping a brightness change of the respective pixels of the target images.

The parameter setting part 145a obtains a value of a specified parameter (a determination region in the embodiment) to be used for determination whether or not a predetermined movement of the subject Ob indicates an abnormality in accordance with the results (i.e., the collection of the movement loci of the subject Ob, the collection of the swaying loci of the curtain, and the collection of the brightness of the respective pixels respectively stored in the detected circumstance information storage part 162a) respectively detected by the movement locus detection processing part 144a-1, the swaying locus detection processing part 144a-2, and the brightness detection processing part 144a-3. Further, the parameter information storage part 161a of the SU storage section 16a stores the obtained value of the specified parameter as a parameter to be used by the abnormality determination processing part 143a to be described later. Specifically, the parameter setting part 145a firstly obtains the movement region of the subject Ob as a value of the determination region based on the movement loci (the collection of movement loci) of the subject Ob detected by the movement locus detection processing part 144a-1 during the specified period. More specifically, for example, the parameter setting part 145a sets a polygonal shape to incorporate all the movement loci (the collection of the movement loci) of the subject Ob, and defines the polygonal shape as the movement region, i.e., a determination region, of the subject Ob. The determination region obtained based on the movement loci of the subject Ob may be directly used as the specified parameter. However, in the embodiment, in order to improve the accuracy of abnormality determination, a final determination region is obtained and adopted as the specified parameter by excluding the swaying region of the curtain and a brightness fluctuation region from the determination region obtained based on the movement loci of the subject Ob in a manner to be described below. Specifically, the parameter setting part 145a firstly obtains a swaying region of the curtain based on the swaying loci (the collection of the swaying loci) detected by the swaying locus detection processing part 144a-2 during the specified period. More specifically, for example, the parameter setting part 145a sets a polygonal shape to incorporate all the swaying loci (the collection of the swaying loci) of the curtain, and defines the polygonal shape as the swaying region of the curtain. Subsequently, the parameter setting part 145a obtains a brightness fluctuation region defined by pixels whose brightness fluctuation amplitudes at a fixed position (a fixed pixel position) indicate a specified brightness threshold or greater based on the brightness of respective pixels of a plurality of target images detected by the brightness detection processing part 144a-3 during the specified period. The specified brightness threshold is set to an appropriate value such as 2/3 or 3/4 of a maximal brightness (e.g., 255 when the photographing part 11 outputs a brightness of 256 gradations) at which the photographing part 11 can output the maximal brightness by using a plurality of samples in such a manner as to distinctively identify, for example, a television screen or a mirror. Moreover, the parameter setting part 145a obtains a final determination region by excluding the obtained swaying region of the curtain and brightness fluctuation region from the determination region obtained based on the movement loci of the subject Ob. Then, the parameter information storage part 161a of the US storage section 16a stores the final determination region as the specified parameter.

The abnormality determination processing part 143a determines based on the predetermined movement of the subject Ob detected by the movement detection processing part 142 and the specified parameter (the final determination region in the embodiment) stored in the parameter information storage part 161a of the US storage section 16a whether or not the predetermined movement of the subject Ob indicates the abnormality. Specifically, in the embodiment, each of the falling down and the falling over in the determination region is, for example, set as an abnormality in advance. The abnormality determination processing part 143a judges the predetermined movement of the subject Ob detected as the falling down by the movement detection processing part 142 as indicating the abnormality when a locating position (a position of the head area detected by the movement detection processing part 142) of the subject Ob falls within the final determination region, and judges the predetermined movement of the subject Ob detected as the falling over by the movement detection processing part 142 as indicating the abnormality when the locating position (the position of the head area detected by the movement detection processing part 142) of the subject Ob falls within the final determination region. To the contrary, the abnormality determination processing part 143a does not judge other movement than the aforementioned movements as indicating an abnormality.

The notification processing part 146 notifies the abnormality determined by the abnormality determination processing part 143a to an external device. Specifically, when the movement of the subject Ob is determined as indicating the abnormality (the falling down, the falling over), the notification processing part 146 generates information (abnormality determination information) representing the abnormality, identifier information to specify and identify the subject Ob on whom the abnormality is determined (identifier information to specify and identify the sensor unit SUa that is detecting the subject Ob), and a communication signal (a first observational information communication signal) containing the image used for the abnormality determination, the communication signal being sent to the administration server SV by the SU communication IF section 15. The notification processing part 146 is appreciated to further directly notify to the external device the waking-up movement and the leaving movement from the bed detected by the movement detection processing part 142.

Upon receipt of a request for distribution of a video image from the stationary terminal device SP or the mobile terminal device TA via the network NW and the US communication IF section 15, the streaming processing part 147 distributes, by means of streaming reproduction via the SU communication IF section 15 and the network NW, a video image (e.g., a live video image) generated by the photographing part 11 to the stationary terminal device SP or the mobile terminal device TA having requested the distribution.

Upon receipt of an input operation from the subject Ob by the nurse call input part 13 or a request for a communication from the stationary terminal device SP or the mobile terminal device TA, the nurse call processing part 148 enables a voice communication using the SU sound input and output part 12 with the stationary terminal device SP or the mobile terminal device TA via the SU communication IF section 15 and the network NW.

As an example, the embodiment shown in FIG. 1 includes first through fourth sensor units SUa-1 through SUa-4. The first sensor unit SUa-1 is arranged in an unillustrated resident room RM-1 of a resident A, i.e., subject Ob-1, who is one of the subjects Ob, the second sensor unit SUa-2 is arranged in an unillustrated resident room RM-2 of another resident B, i.e., subject Ob-2, who is another one of the subjects Ob, the third sensor unit SUa-3 is arranged in an unillustrated resident room RM-3 of further another resident C, i.e., subject Ob-3, who is further another one of the subjects Ob, and the fourth sensor unit SUa-4 is arranged in an illustrated resident room RM-4 of sill further another resident D, i.e., subject Ob-4, who is one of the subjects Ob.

The photographing part 11 and the movement detection processing part 142 correspond to an exemplary first detector which detects a predetermined movement of the subject Ob. The photographing part 11 and the movement locus detection processing part 144a-1 correspond to an exemplary second detector which detects one specified circumstance in connection with the specified parameter. The photographing part 11 and the swaying locus detection processing part 144a-2 correspond to another exemplary second detector which detects another specified circumstance in connection with the specified parameter. The photographing part 11 and the brightness detection processing part 144a-3 correspond to further another exemplary second detector which detects further another specified circumstance in connection with the specified parameter. The sensor unit SUa corresponds to an exemplary subject observation unit. In the embodiment, the photographing part 11 serves as a constituent element of both the first detector and the second detector, but may be provided independently therefrom (without being shared by the first and second detectors).

The administration server SV has a communication function to communicate with the other devices SUa, SP, TA via the network NW, and serves as a device for receiving the abnormality (the falling down, the falling over in the embodiment) of the subject Ob and an image thereof from the sensor unit SUa, and administrating the abnormality and the image as information (observational information) about observation of the subject Ob. Upon receipt of the abnormality (the falling down, the falling over in the embodiment) of the subject Ob and the image thereof from the sensor unit SUa, the administration server SV stores (records) the abnormality and the image as the observational information of the subject Ob, and sends a communication signal (a second observational information communication signal) containing the abnormality (the falling down, the falling over in the embodiment) of the subject Ob and the image thereof to the stationary terminal device SP and the mobile terminal device TA. In this manner, the abnormality determined on the subject Ob is notified to the external stationary terminal device SP and the mobile terminal device TA. The administration server SV provides data to a client (the stationary terminal device SP, the mobile terminal device TA and the like in the embodiment) in response to a request from the client. The administration server SV may be made up by, for example, a computer having a communication function.

The stationary terminal device SP has a communication function to communicate with the other devices SUa, SV, TA via the network NW, a display function to display predetermined information, and an input function to input a predetermined instruction or predetermined data, and further serves as a user interface (UI) of the subject observation system MSa by inputting the predetermined instruction or data to be given to the administration server SV or the mobile terminal device TA, displaying the abnormality (the falling down, the falling over in the embodiment) of the subject Ob and the image thereof obtained by the sensor unit SUa and the like. For example, the stationary terminal device SP may be made up by a computer having a communication function.

The mobile terminal device TA has a communication function to communicate with the other devices SV, SP, SU via the network NW, a display function to display predetermined information, an input function to input a predetermined instruction or predetermined data, and a talking function to perform a voice communication, and serves as a device for receiving and displaying the observational information about the subject Ob by inputting the predetermined instruction or data to be given to the administration server SV or the sensor unit SUa, and displaying the abnormality (the falling down, the falling over in the embodiment) of the subject Ob and the image thereof obtained by the sensor unit SUa through a notification from the administration server SV. The mobile terminal device TA may be made up by a portable communication terminal device such as a tablet computer, a smart phone and a mobile phone.

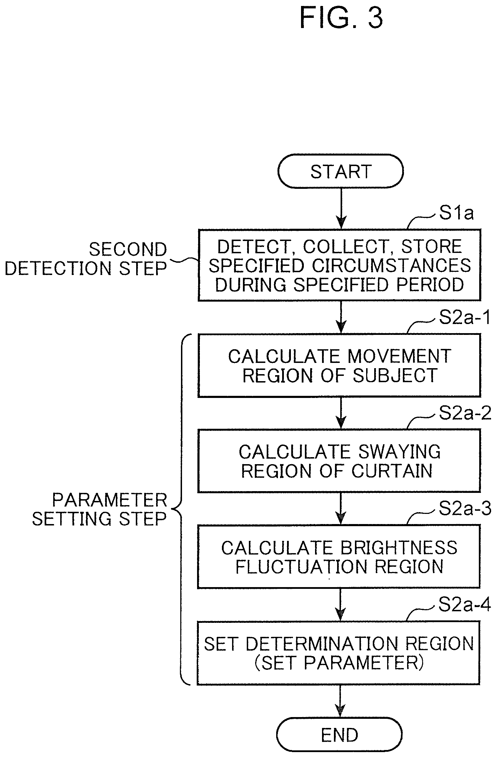

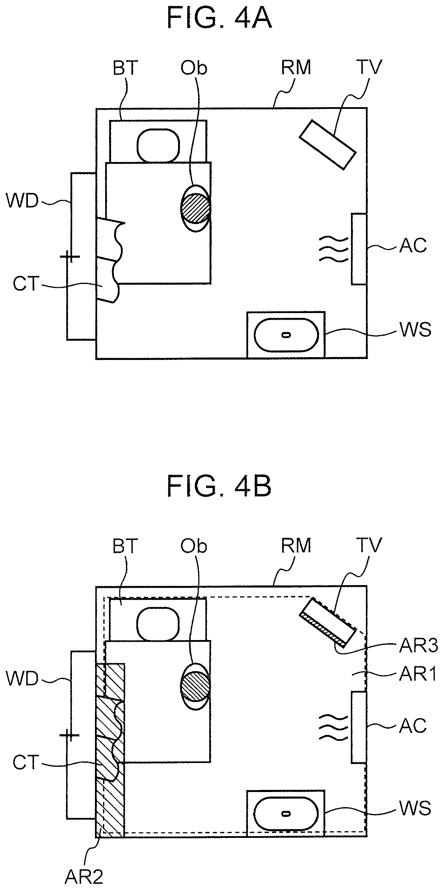

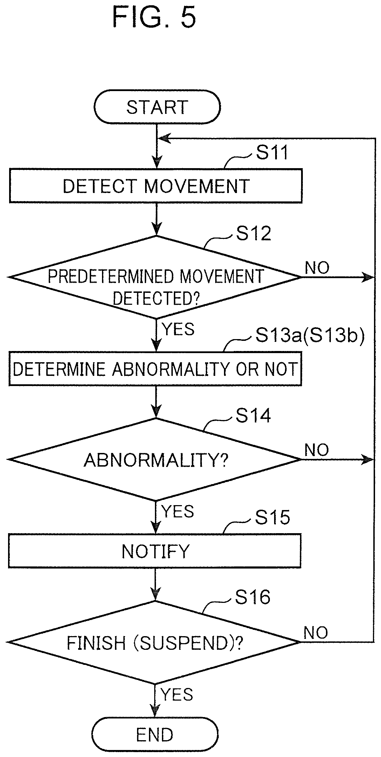

Next, operations of the subject observation system MSa and the sensor unit SUa in the embodiment will be described. FIG. 3 is a flowchart showing an operation of the sensor unit for setting a parameter in the first embodiment. FIGS. 4A and 4B are diagrams each explaining a process of setting a parameter (process of setting a determination region) by the sensor unit according to the first embodiment. FIG 4A shows an arrangement in the resident room RM, and FIG. 4B shows a parameter set by a setting process for the resident room RM shown in FIG. 4A. FIG. 5 is a flowchart showing an operation of the sensor unit for detecting a movement in the sensor unit according to the embodiment.

### (Parameter setting process)

A subject observation system MSa having the above-described configuration includes respective devices SUa, SV, SP, TA which initialize necessary parts thereof and then activate when the power is turned on. A sensor unit SUa includes a control processing section 14a operably provided with a US control part 141, a movement detection processing part 142, an abnormality determination processing part 143a, a movement locus detection processing part 144a-1, a swaying locus detection processing part 144a-2, a brightness detection processing part 144a-3, a parameter setting part 145a, a notification processing part 146, a streaming processing part 147, and a nurse call processing part 148, owing to execution of control processing programs thereof.

In the parameter setting process for setting a specified parameter (a final determination region in the embodiment) in FIG. 3, the sensor unit SUa firstly renders the photographing part 11 and the SU control processing section 14a to detect and collect specified circumstances (movement loci of a subject Ob, swaying loci of a curtain, a brightness of respective pixels of target images in the embodiment) in connection with the specified parameter during a specified period, and then renders the SU storage section 16a to store (record) the specified circumstances (S1a). Specifically, the SU control part 141 firstly causes the photographing part 11 to photograph a photographing target and generate a target image. Next, the movement locus detection processing part 144a-1 detects movement loci of a subject Ob as one of the specified circumstances based on the target image photographed by the photographing part 11, and the detected circumstance information storage part 162a stores the detected movement loci of the subject Ob. The swaying locus detection processing part 144a-2 detects swaying loci of a curtain as another one of the specified circumstances based on the target image photographed by the photographing part 11, and the detected circumstance information storage part 162a stores the detected swaying loci of the curtain. The brightness detection processing part 144a-3 detects a brightness of respective pixels of target images photographed by the photographing part 11 as further another one of the specified circumstances, and the detected circumstance information storage part 162a stores the detected brightness of the respective pixels of the target images. Then, the process is executed for each frame during the specified period such as one week.

Upon collection of the data (result data) respectively acquired to obtain the parameter, the sensor unit SUa renders the parameter setting part 145a to obtain a movement region of the subject Ob based on the movement loci (a collection of the movement loci) collected in step S1a (S2a-1).

For example, when the subject Ob locates in a resident room RM of one room studio type as shown in FIG 4A, the movement locus detection processing part 144a-1 extracts a moving body region from the target image photographed by the photographing part 11, and detects a specified point in the extracted moving body region as a movement locus of the subject Ob in the step S1a. For example, when movement loci of the subject Ob are detected in each frame during one week, the movement loci of the subject Ob will be seen substantially over the entire resident room RM. In the step S2a-1, a rectangular region defined by a dashed line in FIG. 4B and excluding a triangle area behind the location of a television TV is obtained as a movement region AR1. The resident room RM shown in FIGS. 4A and 4B has a substantially rectangular shape in a planer view. In the resident room RM, a sleeping equipment BT is arranged along one wall provided with a bay window WD. Further, a curtain CT is hanged at the bay window WD. Another wall opposite to the one wall is provided with an air conditioner AC at a substantially upper intermediate position thereof. The television TV locates closer to one end of the air conditioner AC, and a washing stand WS locates closer to the other end of the air conditioner AC. In the example shown in FIGS. 4A and 4B, the subject Ob sits at a side end of the sleeping equipment BT and thus is in a sitting posture.

Returning to FIG. 3, next, the sensor unit SUa renders the parameter setting part 145a to obtain a swaying region of the curtain based on swaying loci (a collection of the swaying loci) of the curtain collected in the step S1a (S2a-2).

For example, in the embodiment shown in FIG 4, the SU storage section 16a stores a position of the bay window WD in advance, and then the swaying locus detection processing part 144a-2 detects a swaying body region around the position of the bay window WD from a target image photographed by the photographing part 11, and detects an outline of the obtained swaying body region as a swaying locus of the curtain. For example, when swaying loci of the curtain CT are detected in each frame during one week, the swaying loci of the curtain CT are seen to extend from the bay window WD to the inside of the resident room RM along the bay window WD. In this case, another rectangular region defined along the bay window WD in the resident room RM is obtained as a swaying region AR2 shown by oblique lines extending downward to the right in FIG 4B.

Returning to FIG. 3, subsequently, the sensor unit SUa further renders the parameter setting part 145a to obtain a brightness fluctuation region based on a brightness of respective pixels of image targets collected in the step S1a (S2a-3).

Generally, a display screen of the television TV has a brightness which largely fluctuates. Therefore, for example, in the embodiment shown in FIGS. 4A and 4B, when the brightness detection processing part 144a-3 detects the brightness of respective pixels of the target images photographed by the photographing part 11 in each frame during, for example, one week, the brightness of each pixel on the display screen (image screen) of the television TV largely fluctuates. In this case, further another rectangular region corresponding to the display screen of the television TV shown by another oblique lines in FIG 4B is detected as a brightness fluctuation region AR3 in the step S2a-2. Similarly, a mirror also has a brightness which largely fluctuates, and thus a region of the mirror is detected as the brightness fluctuation region as well.

Returning to FIG. 3, the sensor unit SUa then renders the parameter setting part 145a to obtain a final determination region by excluding the swaying region of the curtain detected in the step S2a-2 and the brightness fluctuation region detected in the step S2a-3 from the movement region (provisional determination region) of the subject Ob detected in the step S2a-1, renders the parameter information storage part 161a of the US storage section 16a to store the final determination region as the specified parameter, and finishes the parameter setting process.

The parameter setting process is executed at an appropriate required timing, such as a timing at which a new resident moves in the resident room RM in place of a previous one, that is, a subject Ob to be observed by the sensor unit SUa changes, a timing after a makeover of the resident room RM by rearranging furniture therein, or a timing of a seasonal change of clothing.

The step S1a corresponds to an exemplary second detection step of detecting specified circumstances in connection with a specified parameter during a specified period. Also, the steps S2a-1 through S2a-4 correspond to an exemplary parameter setting step of obtaining a value of the specified parameter based on the specified circumstances detected in the second detection step during the specified period, the obtained value of the specified parameter being stored in the parameter information storage part 161a as the specified parameter to be used in an abnormality determination step to be described below.

### (Abnormality determination process)

In the embodiment, an abnormality determination process for determining whether or not a predetermined movement of a subject Ob indicates an abnormality is executed in a manner described below.

In the sensor unit SUa, the photographing part 11 sequentially acquires images in each fixed period of time in accordance with a predetermined frame rate. When images in one frame are input to the SU control processing section 14a from the photographing part 11, the sensor unit SUa firstly renders the movement detection processing part 142 to execute a process of detecting a predetermined movement of the subject Ob based on a target image photographed by the photographing part 11 in FIG 5 (S11).

Subsequently, the sensor unit SUa determines whether or not the movement detection processing part 142 detects a predetermined movement of the subject Ob in the step S11 (S12). When determining that no predetermined movement of the subject Ob is detected in the step S11 (No), the sensor unit SUa returns the process to the step S11 in order to execute the image processing for a subsequent frame. To the contrary, when the predetermined movement of the subject Ob is detected in the step S11 (Yes), subsequent step S13a is executed.

In the step S13a, the sensor unit SUa executes a process to render the abnormality determination processing part 143a to determine whether or not the predetermined movement of the subject Ob detected in the step S11 indicates an abnormality. Specifically, the abnormality determination processing part 143a determines based on the predetermined movement of the subject Ob detected in the step S11 and the specified parameter (the final determination region in the embodiment) stored in the parameter information storage part 161a whether or not the predetermined movement of the subject Ob indicates the abnormality. More specifically, in the embodiment, the abnormality determination processing part 143a judges the predetermined movement of the subject Ob detected as the falling down by the movement detection processing part 142 as indicating the abnormality when a locating position (a position of a head area detected by the movement detection processing part 142) of the subject Ob falls within the final determination region, and judges the predetermined movement of the subject Ob detected as the falling over by the movement detection processing part 142 as indicating the abnormality when the locating position (the position of the head area detected by the movement detection processing part 142) of the subject Ob falls within the final determination region. To the contrary, the abnormality determination processing part 143a does not judge other movement than the aforementioned movements as indicating an abnormality.

Next, the sensor unit SUa renders the abnormality determination processing part 143a to determine whether or not the predetermined movement of the subject Ob is judged as indicating the abnormality in the step 13a (S14). When it is determined that the predetermined movement of the subject Ob is not judged as indicating the abnormality in step 13a (No), the sensor unit SUa returns the process to the step S11 in order to execute the image processing for a subsequent frame. To the contrary, when it is determined that the predetermined movement of the subject Ob is judged as indicating the abnormality (Yes), subsequent step S15 is executed.

In the step S15, the sensor unit SUa sends the first observational information communication signal to the administration server SV in order to render the notification processing part 146 to notify the abnormality determined in the step S13a to the stationary terminal device SP and the mobile terminal device TA.

After that, the sensor unit SUa determines whether or not to finish (suspend) the abnormality determination process (S16). When determining not to finish (suspend) the abnormality determination process (No), the sensor unit SUa returns the process to the step S11 in order to execute the image processing for a subsequent frame. To the contrary, when determining to finish (suspend) the abnormality determination process (No), the sensor unit SUa finishes (suspends) the abnormality determination process.

Meanwhile, the administration server SV having received the first observational information communication signal in the step S15 stores (records), as the observational information of the subject Ob, the abnormality (the falling down, the falling over in the embodiment) of the subject Ob and the image thereof contained in the first observational communication signal. Further, the administration server SV sends the second observational information signal containing the abnormality (the falling down, the falling over in the embodiment) of the subject Ob and the image thereof to the stationary terminal device SP and the mobile terminal device TA.

The stationary terminal device SP and the mobile terminal device TA respectively having received the second observational information communication signal display the abnormality (the falling down, the falling over in the embodiment) of the subject Ob and the image thereof contained in the second observational information communication signal. An observer can notice an occurrence of the abnormality to the subject Ob by referring to the display of the abnormality of the subject Ob on the stationary terminal device SP and the mobile terminal device TA.

After the noticing, the observer requests the sensor unit SUa to distribute a video image by using the stationary terminal device SP or the stationary terminal device TA, if necessary. In response to the request, the streaming processing part 147 distributes, by means of streaming reproduction, a video image (e.g., a live video image) generated by the photographing part 11 to the stationary terminal deice SP or the mobile terminal device TA having requested the distribution.

Moreover, the observer requests the sensor unit SUa to perform a communication by using the stationary terminal device SP or the stationary terminal device TA, if necessary. In response to the request, the nurse call processing part 148 enables a voice communication with the stationary terminal device SP or the mobile terminal device TA having requested the communication. Similarly, when the nurse call input part 13 receives an input operation from the subject Ob, the nurse call processing part 148 enables a voice communication with the stationary terminal device SP or the mobile terminal device TA.

As described above, the subject observation system SMa, the sensor unit SUa, and the subject observation method for use in the unit in the embodiment are customizable owing to automatic setting of a specified parameter (a final determination region in the embodiment) by the parameter setting part 145a. Furthermore, a value of the specified parameter (the final determination region in the embodiment) is obtained based on the specified circumstances (the movement loci of the subject Ob, the swaying loci of the curtain, the brightness of respective pixels of target images in the embodiment) detected during a specified period. Accordingly, the subject observation system SMa, the sensor unit SUa, and the subjection observation method for use in the unit are adjustable more suitably for any actual situation. The subject observation system SMa, the sensor unit SUa, and the subject observation method for use in the unit make it possible to reduce time and effort required to set the specified parameter, and further decrease erroneous settings of the specified parameter to a different subject Ob owing to the automatic setting of the specified parameter.

The subject observation system SMa, the sensor unit SUa, and the subject observation method for use in the unit can set the determination region in accordance with an actual movement of the subject Ob by obtaining a movement region of the subject Ob as a value of the determination region based on movement loci (a collection of the movement loci) of the subject Ob.

There is a possibility that swaying of the curtain CT is erroneously detected as a predetermined movement of the subject Ob. The subject observation system SMa, the sensor unit SUa and the subject observation method for use in the unit make it possible to reduce erroneous detections due to the swaying of the curtain CT by obtaining a swaying region of the curtain CT based on swaying loci (a collection of the swaying loci) of the curtain CT, and excluding the obtained swaying region of the curtain CT from the determination region.

For example, when the subject Ob or the curtain is reflected in a television or a mirror, a reflected image therein is likely to be erroneously detected as a predetermined movement of the subject Ob. Each of the television and the mirror has a brightness which largely fluctuates when seen through an image. The subject observation system SMa, the sensor unit SUa, and the subject observation method for use in the unit make it possible to reduce erroneous detections due to the reflected image by obtaining a brightness fluctuation region defined by pixels whose brightness fluctuation amplitudes at a fixed position indicate a specified brightness threshold or greater based on the brightness of the respective pixels of the target images, and excluding the obtained brightness fluctuation region from the determination region.

Next, another embodiment will be described.

### (Second embodiment)

The subject observation system MSa and the sensor unit SUa according to the first embodiment can automatically customize the determination region which is an exemplary parameter. In contrast, a subject observation system MSb and a sensor unit SUb according to a second embodiment can automatically customize a threshold (a falling over determination threshold) which is another exemplary parameter to finally determine the falling over or not.

The subject observation system MSb according to the second embodiment includes, for example as shown in FIG 1, one or more sensor units SUb (SUb-1 to SUb-4), an administration server SV, a stationary terminal device SP and one or more mobile terminal devices TA (TA-1, TA-2). Specifically, the subject observation system MSb according to the second embodiment includes the sensor units SUb in place of the sensor units SUa according to the first embodiment. In other words, the administration server SV, the stationary terminal device SP, and the mobile terminal device TA in the subject observation system MSb according to the second embodiment respectively have the same configurations as those in the subject observation system MSb according to the first embodiment, and accordingly, the explanation of these elements will be omitted.

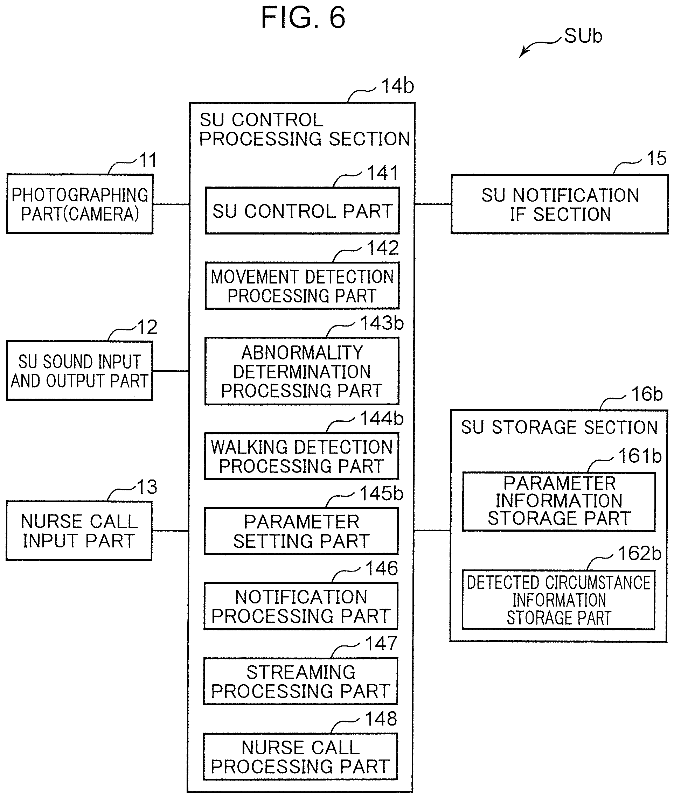

FIG. 6 is a block diagram showing a configuration of a sensor unit according to the second embodiment. Like the sensor unit SUa according to the first embodiment, each of the sensor units SUb according to the second embodiment has a communication function to communicate with the other devices SV, SP, TA via a network NW, and serves as a device for detecting a predetermined movement of a subject Ob, and notifying an abnormality to the stationary terminal device SP and the mobile terminal device TA (terminal devices SP, TA) via the administration server SV when the detected predetermined movement of the subject Ob is determined to indicate the abnormality. The sensor unit SUb according to the second embodiment is another exemplary subject observation unit, and includes, for example as shown in FIG 6, a photographing part 11, an SU sound input and output part 12, a nurse call input part 13, an SU control processing section 14b, an SU communication IF section 15, and an SU storage section 16b. The photographing part 11, the SU sound input and output part 12, the nurse call input part 13 and the SU communication IF section 15 in the sensor unit SUb according to the second embodiment respectively have the same configurations as those in the sensor unit SUa according to the first embodiment, and accordingly, the explanation of these elements will be omitted.

The SU storage section 16b is connected to the SU control processing section 14a, and serves as a circuit for storing various predetermined programs and data in accordance with a control of the SU control processing section 14a. The various predetermined programs include control processing programs such as: an SU control program; a movement detection processing program; an abnormality determination processing program; a walking detection processing program; a parameter setting program; a notification processing program; a streaming processing program; and a nurse call processing program. The SU control program, the movement detection processing program, the notification processing program, the streaming processing program and the nurse call processing program in the second embodiment respectively are the same as those in the first embodiment, and accordingly, the explanation of these programs will be omitted. The walking detection processing program is a program for detecting a walking speed and a size of the subject Ob during walking based on a target image photographed by the photographing part 11. The parameter setting program is a program for obtaining a value of the specified parameter based on results, that is, walking speeds and sizes of the subject Ob during walking, respectively detected during a specified period under the walking detection processing program, and causing the SU storage section 16b to store the obtained value of the specified parameter as a parameter to be used under the abnormality determination processing program (by the abnormality determination processing part 143b). While an exemplary specified parameter in the first embodiment is the final determination region, another exemplary specified parameter in the second embodiment is a threshold (a falling over determination threshold) to finally determine whether or not the falling over detected under the movement detection processing program is actual falling over. The abnormality determination processing program is a program for determining based on the predetermined movement of the subject Ob detected under the movement detection processing program and the specified parameter, i.e., the falling over determination threshold, stored in the US storage section 16b whether or not the predetermined movement of the subject Ob indicates an abnormality,. The various predetermined data contains, for example, data necessary for executing the programs, such as a sensor ID of the sensor unit SUb, a communication address of the administration server SV, the specified parameter (the falling over determination threshold in the embodiment) and circumstances (a walking speed and a size of the subject Ob during walking in the embodiment) in connection with the specified parameter, and data necessary for observation of the subject Ob. Like the SU storage section 16a, the SU storage section 16b includes, for example, a ROM, an EEPROM and a RAM.

The SU storage section 16b is operably provided with a parameter information storage part 161b and a detected circumstance information storage part 162b for respectively storing the specified parameter and circumstances in connection with the specified parameter. The parameter information storage part 161b stores the specified parameter (the falling over determination threshold in the embodiment) to be used for determination whether or not the predetermined movement of the subject Ob to be observed indicates the abnormality. The detected circumstance information storage part 162b stores the circumstances (the walking speed and the size of the subject Ob during walking in the embodiment) in connection with the specified parameter as one of the specified circumstances.

Like the SU control processing section 14a, the SU control processing section 14b serves as a circuit for controlling the respective parts of the sensor unit SUb in accordance with their functions, acquiring a target image by causing the photographing part 11 to photograph the subject Ob from a position higher than the subject Ob, detecting a predetermined movement of the subject Ob based on the acquired target image, and sending an abnormality to the administration server SV in order to notify the abnormality to an external device when the detected predetermined movement of the subject Ob is determined as indicating the abnormality. The SU control processing section 14b includes, for example, a CPU and peripheral circuits therearound. The control processing section 14b is operably provided with an SU control part 141, a movement detection processing part 142, an abnormality determination processing part 143b, a walking detection processing part 144b, a parameter setting part 145b, a notification processing part 146, a streaming processing part 147, and a nurse call processing part 148, owing to execution of the control processing programs. The SU control part 141, the movement detection processing part 142, the notification processing part 146, the streamlining processing part 147 and the nurse call processing part 148 in the second embodiment respectively have the same configurations as those in the first embodiment, and accordingly, the explanation of these elements will be omitted.

The walking detection processing part 144b detects a walking speed and a size of the subject Ob during walking as one of the specified circumstances based on the target image photographed by the photographing part 11, and the detected circumstance information storage part 162b stores the detected walking speed and size of the subject Ob during walking. Specifically, the walking detection processing part 144b firstly extracts a moving body region as a person body region of the subject Ob from the target image photographed by the photographing part 11 by means of, for example, the background subtraction way or the frame subtraction way. Then, the walking detection processing part 144b detects a walking speed of the subject Ob from a movement amount between frames in the extracted moving body region, and a size of the moving body region at this time as the size of the subject Ob. The detected circumstance information storage part 162b is appreciated to store walking speeds and sizes of the subject Ob for each frame, and further the walking detection processing part 144b is appreciated to take each average of the walking speeds and the sizes of the subject Ob during walking detected in each frame for each fixed period of time (e.g., 30 seconds, 1 minute, 5 minutes or the like) by excluding any walking speed indicating substantially zero, i.e., a predetermined threshold or smaller, in order to reduce differences in the data between frames and decrease an amount of the data. The detected circumstance information storage part 162b may store the averaged walking speed and size of the subject Ob during walking for each fixed period of time. Collection of the data of the walking speeds and sizes of the subject Ob during walking is executed during a specified period. The specified period may be any period, for example, a period of four to seven days suitable for grasping daily movement patterns of the subject Ob.

The parameter setting part 145b obtains a value of a specified parameter (a falling over determination threshold in the embodiment) to be used for determination based on results (i.e., respective collections of the walking speeds and the sizes of the subject Ob during walking stored in the detected circumstance information storage part 162b) respectively detected by the walking detection processing part 144b whether or not a predetermined movement of the subject Ob indicates an abnormality. The parameter information storage part 161b of the SU storage section 16b stores the obtained value of the specified parameter as a parameter to be used by the abnormality determination processing part 143b to be described later. Specifically, the parameter setting part 145b sets the falling over determination threshold in a manner to be described below.

Meanwhile, one subject Ob who walks substantially uprightly at a relatively rapid walking speed is likely to fall abruptly by losing his or her balance, when falling over. In contrast, another subject Ob who walks while leaning forward at a relatively slow walking speed is likely to uncontrollably collapse, when falling over but not falling abruptly by losing his or her balance. It is viewed through target images photographed from a high position that the size of the one subject Ob who walks substantially uprightly is seen to be relatively small, and the size of the another subject Ob who walks while leaning forward is seen to be relatively large.

Taking this into consideration, in the embodiment, the subject Ob is recognized as the one who walks substantially uprightly or the another one who walks while leaning forward based on the walking speed and the size thereof during the walking, and a falling over determination threshold is set in accordance with a result of the recognition. Specifically, set in advance are a walking speed threshold and a walking size threshold to recognize the subject Ob as the one who walks substantially uprightly or the another one who walks while leaning forward based on the walking speed and the size thereof during the walking, and the SU storage section 16b stores the set thresholds. The SU storage section 16b stores a first falling over determination threshold set in advance for the one subject Ob who walks substantially uprightly, and a second falling over determination threshold set in advance for the another subject Ob who walks while leaning forward. As described above, the one subject Ob who walks substantially uprightly is likely to fall abruptly by losing his or her balance, while the another subject Ob who walks while leaning forward is likely to uncontrollably collapse in a case that he or she does not fall abruptly by losing his or her balance. Hence, the second falling over determination threshold is set to a time longer than the first falling over determination threshold. For example, the first falling over determination threshold is set to 0.1, 0.3 or 0.5 seconds, and the second falling over determination threshold is set to 2, 3 or 5 seconds. The parameter setting part 145b firstly takes each average of respective collections of walking speeds and sizes of the subject Ob during walking stored in the detected circumstance information storage part 162b by excluding any walking speed indicating substantially zero, i.e., the predetermined threshold or smaller, and accordingly obtains a final walking speed and a final size during walking. Subsequently, the parameter setting part 145b judges the subject Ob as the one who walks substantially uprightly in a first case where the obtained final walking speed indicates the walking speed threshold or greater and the obtained final size during walking indicates the walking size threshold or smaller. In this case, the parameter information storage part 161b stores the first falling over determination threshold as the specified parameter. The parameter setting part 145b judges the subject Ob as the another one who walks while leaning forward in a second case where the obtained final walking speed indicates a value smaller than the walking speed threshold and the obtained final size during walking indicates a value greater than the walking size threshold. In this case, the parameter information storage part 161b stores the second falling over determination threshold as the specified parameter. If the obtained final walking speed and size during walking do not fall within both the first and second cases, the parameter information storage part 161b is appreciated to store, as the specified parameter, a default value (a third falling over determination threshold, e.g., an appropriate value between the first falling over determination threshold and the second falling over determination threshold) set in advance. Further, the abnormality determination processing part 143b may directly judge the falling over detected by the movement detection processing part 142 as indicating an abnormality without setting the specified parameter.

The abnormality determination processing part 143b determines based on the predetermined movement of the subject Ob detected by the movement detection processing part 142 and the specified parameter (the falling over determination threshold in the embodiment) stored in the parameter information storage part 161b of the US storage section 16b whether or not a predetermined movement of the subject Ob indicates an abnormality. Specifically, in the embodiment, each of the falling down and the falling over is, for example, set as an abnormality in advance. The abnormality determination processing part 143a judges the predetermined movement of the subject Ob detected as the falling down by the movement detection processing part 142 as indicating the abnormality, and judges the predetermined movement of the subject Ob detected as the falling over by the movement detection processing part 142 as indicating the abnormality when a time for a size change of the head of the subject Ob represents the falling over determination threshold or smaller. More specifically, the abnormality determination processing part 143b judges the predetermined movement of the subject Ob detected as the falling over by the movement detection processing part 142 as indicating the abnormality when the first falling over determination threshold is stored in the parameter information storage part 161b and a time for the size change of the head of the subject Ob represents the first falling over determination threshold or smaller. In this manner, it is possible to more appropriately determine the abnormality of the falling over of the subject Ob who walks substantially uprightly without erroneously judging a bending posture to pick up something as indicating the abnormality of the falling over. The abnormality determination processing part 143b further judges the predetermined movement of the another subject Ob detected as the falling over by the movement detection processing part 142 as indicating the abnormality when the second falling over determination threshold is stored in the parameter information storage part 161b and a time for the size change of the head of the another subject Ob represents the second falling over determination threshold or smaller. In this way, both the abrupt falling of the another subject Ob by losing his or her balance and the uncontrollable collapsing thereof can be judged as indicating the abnormality. Therefore, it is possible to more appropriately determine the abnormality of the falling over of the another subject Ob who walks while leaning forward.

The photographing part 11 and the movement detection processing part 142 correspond to an exemplary first detector which detects a predetermined movement of the subject Ob. The photographing part 11 and the walking detection processing part 144b correspond to an exemplary second detector which detects a specified circumstance in connection with the specified parameter. The sensor unit SUb corresponds to an exemplary subject observation unit. Additionally, in the embodiment, the photographing part 11 serves as a constituent element of both the first detector and the second detector, but may be provided independently therefrom (without being shared by the first and second detectors).

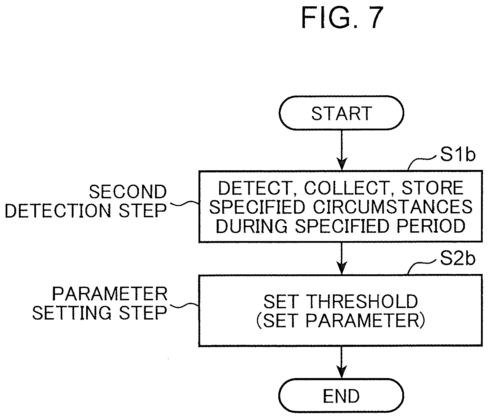

Next, operations of the subject observation system MSb and the sensor unit SUb according to the embodiment will be described. FIG. 7 is a flowchart showing an operation of the sensor unit for setting a parameter in the second embodiment.

A subject observation system MSb having the above-described configuration includes respective devices SUb, SV, SP, TA which initialize necessary parts thereof and then activate when the power is turned on. The sensor unit SUb includes a control processing section 14b operably provided with a US control part 141, a movement detection processing part 142, an abnormality determination processing part 143b, a walking detection processing part 144b, a parameter setting part 145b, a notification processing part 146, a streaming processing part 147 and a nurse call processing part 148, owing to execution of control processing programs thereof.

In the parameter setting process for setting a specified parameter (a final determination region in the embodiment) in FIG. 7, the sensor unit SUb firstly renders the photographing part 11 and the SU control processing section 14b to detect and collect specified circumstances (walking speeds and sizes of the subject Ob during walking in the embodiment) in connection with the specified parameter during a specified period, and then renders the SU storage section 16b to store (record) the specified circumstances (S1b). Specifically, the SU control part 141 firstly causes the photographing part 11 to photograph a photographing target and generate a target image. Next, the walking detection processing part 144b detects walking speeds and sizes of the subject Ob during walking as one of the specified circumstances based on the target image photographed by the photographing part 11, and the detected circumstance information storage part 162b stores the detected walking speeds and sizes of the subject Ob during walking. Then, the process is executed for each frame during the specified period such as one week.

Upon collection of the data (result data) respectively acquired to obtain the parameter, the sensor unit SUb renders the parameter setting part 145b to execute a setting process of setting a threshold, i.e., a falling over determination threshold, as a value of the parameter to be stored in the parameter information storage part 161b (S2b), and finishes the parameter setting process. Specifically, the parameter setting part 145b firstly obtains a final walking speed and a final size of the subject Ob during walking by taking each average of the walking speeds and the sizes of the subject Ob during walking detected by the walking detection processing part 144b during the specified period, while excluding any walking speed indicating substantially zero, i.e., the predetermined threshold or smaller. Subsequently, the parameter setting part 145b judges the subject Ob as the one who walks substantially uprightly in a first case where the obtained final walking speed indicates the walking speed threshold or greater and the obtained final size during walking indicates the walking size threshold or smaller. The parameter information storage part 161b stores the first falling over determination threshold as the specified parameter. In contrast, the parameter setting part 145b judges the subject Ob as the another one who walks while leaning forward in a second case where the obtained final walking speed indicates a value smaller than the walking speed threshold and the obtained final size during walking indicates a value greater than the walking size threshold. The parameter information storage part 161b stores the second falling over determination threshold as the specified parameter.

The parameter setting process is executed at an appropriate required timing in the same manner as that in the first embodiment.

The step Sib corresponds to an exemplary second detection step of detecting specified circumstances in connection with a specified parameter during a specified period. Also, the step S2b corresponds to an exemplary parameter setting step of obtaining a value of the specified parameter based on the specified circumstances detected in the second detection step during the specified period, the obtained value of the specified parameter being stored in the parameter information storage part 161b as the specified parameter to be used in an abnormality determination step to be described below.

### (Abnormality determination process)

An abnormality determination process to determine whether or not a predetermined movement of a subject Ob indicates an abnormality is executed in the same manner as the process represented by the flowchart shown in FIG 5, except that an abnormality determination step S13b to be described below is executed in place of the abnormality determination step S13a.

In the abnormality determination step S13b in the second embodiment, the abnormality determination processing part 143b determines based on the predetermined movement of the subject Ob detected in the step 11 and the specified parameter (the falling over determination threshold in the embodiment) stored in the parameter information storage part 161b whether or not the predetermined movement of the subject Ob indicates an abnormality. Specifically, the abnormality determination processing part 143a judges the predetermined movement of the subject Ob detected as the falling down by the movement detection processing part 142 as indicating an abnormality, and judges the predetermined movement of the subject Ob detected as the falling over by the movement detection processing part 142 as indicating the abnormality when the first falling over determination threshold is stored in the parameter information storage part 161b and a time for a size change of the head of the subject Ob represents the first falling over determination threshold or smaller, and further judges the predetermined movement of the subject Ob detected as the falling over by the movement detection processing part 142 as indicating an abnormality when the second falling over determination threshold is stored in the parameter information storage part 161b and a time for the size change of the head of the subject Ob represents the second falling over determination threshold or smaller. To the contrary, the abnormality determination processing part 143b does not judge other movement than the aforementioned movements as indicating an abnormality.

As described above, the subject observation system SMb, the sensor unit SUb, and the method for use in the unit in the embodiment are customizable owing to automatic setting of a specified parameter (a falling over determination threshold in the embodiment) by the parameter setting part 145b. Furthermore, a value of the specified parameter (the falling over threshold in the embodiment) is obtained based on the specified circumstances (the walking speeds and the sizes of the subject Ob during walking in the embodiment) detected during a specified period. Accordingly, the subject observation system SMb, the sensor unit SUb, and the subject observation method for use in the unit are adjustable more suitably for any actual situation. The subject observation system SMb, the sensor unit SUb, and the subject observation method for use in the unit make it possible to reduce time and effort required to set the specified parameter, and further decrease erroneous settings of the specified parameter to a different subject Ob owing to the automatic setting of the specified parameter.

In the subject observation system SMb, the sensor unit SUb, and the subject observation method for use in the unit, the parameter setting part 145b obtains a value (a first falling over determination threshold or a second falling over determination threshold in the embodiment) of the specified parameter based on the walking speeds and the sizes of the subject Ob during walking detected during the specified period. Therefore, it is possible to recognize the subject Ob as one who walks substantially uprightly or another one who walks while leaning forward, and set the value of the specified parameter in accordance with the recognition. In this way, the subject observation system SMb, the sensor unit SUb, and the subject observation method for use in the unit make it possible to automatically set a value of the specified parameter in accordance with a characteristic of the subject Ob, and more accurately detect the falling over.

Here, a subject observation system MS is appreciated to include a sensor unit SU having the function of the sensor unit SUa according to the first embodiment and the function of the sensor unit SUb according to the second embodiment in combination.

Various aspects of technologies are disclosed in this specification as described above. Main technologies among them will be summarized below.

A subject observation unit according to one aspect includes: a parameter information storage part which stores a specified parameter to be used for determination whether or not a predetermined movement of a subject to be observed indicates an abnormality; a first detector which detects the predetermined movement of the subject; an abnormality determination part which determines based on the predetermined movement of the subject detected by the first detector and the specified parameter stored in the parameter information storage part whether or not the predetermined movement of the subject indicates the abnormality; a second detector which detects specified circumstances in connection with the specified parameter; and a parameter setting part which obtains a value of the specified parameter based on the specified circumstances detected by the second detector during a specified period, the obtained value of the specified parameter being stored in the parameter information storage part as the specified parameter to be used by the abnormality determination part.

The subject observation unit includes the second detector and the parameter setting part. The second detector detects specified circumstances in connection with the specified parameter, and the parameter setting part obtains a value of the specified parameter based on the specified circumstances detected by the second detector during the specified period, the obtained value of the specified parameter being stored in the parameter information storage part as the specified parameter to be used by the abnormality determination part. In this way, the subject observation unit is customizable owing to automatic setting of a parameter. The value of the specified parameter is obtained based on the specified circumstances detected by the second detector during the specified period. Accordingly, the subject observation unit is adjustable more suitably for any actual situation. The subject observation unit also makes it possible to reduce time and effort required to set the specified parameter, and further decrease erroneous settings of the specified parameter to a different subject Ob owing to the automatic setting of the specified parameter.

In a subject observation unit according to another aspect, the specified parameter represents a determination region to be used for the determination, the second detector detects movement loci of the subject as one of the specified circumstances, and the parameter setting part obtains a movement region of the subject as a value of the determination region based on the movement loci of the subject detected by the second detector during the specified period. Preferably, in the subject observation unit, the second detector includes a photographing part which photographs a predetermined target region, and a movement locus detection processing part which detects the movement loci of the subject as one of the specified circumstances based on the target image of the predetermined target region photographed by the photographing part.

In the subject observation unit, the second detector detects the movement loci of the subject as one of the specified circumstances, and the parameter setting part obtains a movement region of the subject as a value of the determination region based on the movement loci of the subject detected by the second detector during the specified period.

In a subject observation unit according to further another aspect, the second detector further detects swaying loci of a curtain as another one of the specified circumstances, and the parameter setting part obtains a swaying region of the curtain based on the swaying loci of the curtain detected by the second detector during the specified period, and excludes the obtained swaying region of the curtain from the determination region. Preferably, in the subject observation unit, the second detector includes a photographing part which photographs a predetermined target region, and a swaying locus detection processing part which detects the swaying loci of the curtain as another one of the specified circumstances based on the target image of the predetermined target region photographed by the photographing part.

There is a possibility that swaying of the curtain is erroneously detected as a predetermined movement of the subject. The subject observation unit renders the second detector to further detect the swaying loci of the curtain as another one of the specified circumstances, and renders the parameter setting part to further obtain the swaying region of the curtain based on the swaying loci of the curtain detected by the second detector during the specified period and exclude the obtained swaying region of the curtain from the determination region, thereby making it possible to reduce erroneous detections due to the swaying of the curtain.

In a subject observation unit according to still another aspect, the second detector includes: a photographing part which photographs a predetermined target region; and a brightness detection processing part which obtains, as further another one of the specified circumstances, a brightness of respective pixels of target images of the predetermined target region photographed by the photographing part, and the parameter setting part further obtains a brightness fluctuation region defined by pixels whose brightness fluctuation amplitudes at a fixed position indicate a specified brightness threshold or greater based on the brightness of the respective pixels of the target images detected by the second detector during the specified period, and excludes the obtained brightness fluctuation region from the determination region.

When the subject or the curtain is reflected in a television or a mirror, a reflected image therein is likely to be erroneously detected as a predetermined movement of the subject. Each of the television and the mirror has a brightness which largely fluctuates when seen through an image. The subject observation unit renders the second detector to obtain, as further another one of the specified circumstances, the brightness of the respective pixels of the target images of the predetermined target region, and renders the parameter setting part to further obtain the brightness fluctuation region defined by pixels whose brightness fluctuation amplitudes at the fixed position indicate the specified brightness threshold or greater based on the brightness of the respective pixels of the target images detected by the second detector during the specified period, and to exclude the obtained brightness fluctuation region from the determination region, thereby making it possible to reduce erroneous detections due to the reflected image.

In a subject observation unit according to still further another aspect, the first detector includes: a photographing part which photographs a predetermined target region from a position higher than the predetermined target region; and a movement detection processing part which detects a head of the subject based on a target image of the predetermined target region photographed by the photographing part, and detects the predetermined movement of the subject in accordance with a time for a size change of the detected head of the subject, the second detector detects, as one of the specified circumstances, walking speeds and sizes of the subject during walking based on the target image photographed by the photographing part of the first detector, and the parameter setting part obtains a value of the specified parameter based on the walking speeds and the sizes of the subject during walking detected by the second detector during the specified period. Preferably, in the subject observation unit, the abnormality determination part judges the predetermined movement of the subject detected as the falling over by the first detector as indicating the abnormality when a time for the size change of the head of the subject represents the value of the specified parameter (the falling over determination threshold) or smaller.

One subject who walks substantially uprightly at a relatively rapid walking speed is likely to fall abruptly by losing his or her balance, when falling over. In contrast, another subject who walks while leaning forward at a relatively slow walking speed is likely to uncontrollably collapse, when falling over but not falling abruptly by losing his or her balance. It is viewed through target images photographed from a high position that the size of the one subject who walks substantially uprightly is seen to be relatively small, and the size of the another subject who walks while leaning forward is seen to be relatively large. In the subject observation unit, the parameter setting part obtains a value of the specified parameter based on the walking speeds and the sizes of the subject during walking detected during the specified period. Therefore, it is possible to recognize the subject as the one who walks substantially uprightly or the another one who walks while leaning forward, and set the value of the specified parameter in accordance with the recognition. In this way, the subject observation unit makes it possible to automatically set a value of the specified parameter in accordance with a characteristic of the subject, and more accurately detect the falling over.

A subject observation method according to one aspect includes: a first detection step of detecting a predetermined movement of a subject to be observed; an abnormality determination step of determining based on the predetermined movement of the subject detected in the first detection step and a specified parameter whether or not the predetermined movement of the subject indicates an abnormality; a second detection step of detecting specified circumstances in connection with the specified parameter during a specified period; and a parameter setting step of obtaining a value of the specified parameter based on the specified circumstances detected in the second detection step during the specified period, the obtained value of the specified parameter being stored in a parameter information storage part as the specified parameter to be used in the abnormality determination step.

The subject observation method includes the second detection step and the parameter setting step respectively of detecting specified circumstances in connection with the specified parameter, and obtaining a value of the specified parameter based on the specified circumstances detected in the second detection step during the specified period, the obtained value of the specified parameter being stored in the parameter information storage as the specified parameter to be used in the abnormality determination step. In this manner, the subject observation method is customizable owing to automatic setting of a parameter. The value of the specified parameter is obtained based on the specified circumstances detected in the second detection step during the specified period. Accordingly, the subject observation method is adjustable more suitably for any actual situation. The subject observation method also makes it possible to reduce time and effort required to set the specified parameter, and further decrease erroneous settings of the specified parameter to a different subject Ob owing to the automatic setting of the specified parameter.

A subject observation system according to another aspect includes: a subject observation unit which is any one of the subject observation units described above for detecting a predetermined movement of a subject to be observed, and notifying an abnormality to an external device when the predetermined movement of the subject is determined to indicate the abnormality; and a terminal device communicatively connected with the subject observation unit to perform an output upon receipt of the abnormality notified by the subject observation unit.

This makes it possible to provide a subject observation system adopting any one of the subject observation units described above, and further the subject observation system having this configuration is customizable owing to automatic setting of a parameter.

This application is based on Japanese patent application No. 2015-219309 field in Japan Patent Office on November 9, 2015, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

### Industrial Applicability

According to the present invention, it is possible to provide a subject observation unit, a subject observation method, and a subject observation system.

## Claims

1. A subject observation unit, comprising:
a parameter information storage part which stores a specified parameter to be used for determination whether or not a predetermined movement of a subject to be observed indicates an abnormality;
a first detector which detects the predetermined movement of the subject;
an abnormality determination part which determines based on the predetermined movement of the subject detected by the first detector and the specified parameter stored in the parameter information storage part whether or not the predetermined movement of the subject indicates the abnormality;
a second detector which detects specified circumstances in connection with the specified parameter; and
a parameter setting part which obtains a value of the specified parameter based on the specified circumstances detected by the second detector during a specified period, the obtained value of the specified parameter being stored in the parameter information storage part as the specified parameter to be used by the abnormality determination part.

2. A subject observation unit according to claim 1, wherein
the specified parameter represents a determination region to be used for the determination,
the second detector detects movement loci of the subject as one of the specified circumstances, and
the parameter setting part obtains a movement region of the subject as a value of the determination region based on the movement loci of the subject detected by the second detector during the specified period.

3. A subject observation unit according to claim 2, wherein
the second detector further detects swaying loci of a curtain as another one of the specified circumstances, and
the parameter setting part obtains a swaying region of the curtain based on the swaying loci of the curtain detected by the second detector during the specified period, and excludes the obtained swaying region of the curtain from the determination region.

4. A subject observation unit according to claim 2 or 3, wherein
the second detector includes:
a photographing part which photographs a predetermined target region; and
a brightness detection processing part which obtains, as further another one of the specified circumstances, a brightness of respective pixels of target images of the predetermined target region photographed by the photographing part, and
the parameter setting part further obtains a brightness fluctuation region defined by pixels whose brightness fluctuation amplitudes at a fixed position indicate a specified brightness threshold or greater based on the brightness of the respective pixels of the target images detected by the second detector during the specified period, and excludes the obtained brightness fluctuation region from the determination region.

5. A subject observation unit according to claim 1, wherein
the first detector includes:
a photographing part which photographs a predetermined target region from a position higher than the predetermined target region; and
a movement detection processing part which detects a head of the subject based on a target image of the predetermined target region photographed by the photographing part, and detects the predetermined movement of the subject in accordance with a time for a size change of the detected head of the subject,
the second detector detects, as one of the specified circumstances, walking speeds and sizes of the subject during walking based on the target image photographed by the photographing part of the first detector, and
the parameter setting part obtains a value of the specified parameter based on the walking speeds and the sizes of the subject during walking detected by the second detector during the specified period.

6. A subject observation method, comprising:
a first detection step of detecting a predetermined movement of a subject to be observed;
an abnormality determination step of determining based on the predetermined movement of the subject detected in the first detection step and a specified parameter whether or not the predetermined movement of the subject indicates an abnormality;
a second detection step of detecting specified circumstances in connection with the specified parameter during a specified period; and
a parameter setting step of obtaining a value of the specified parameter based on the specified circumstances detected in the second detection step during the specified period, the obtained value of the specified parameter being stored in a parameter information storage part as the specified parameter to be used in the abnormality determination step.

7. A subject observation system, comprising:
a subject observation unit according to any one of claims 1 to 5 which detects a predetermined movement of a subject to be observed, and notifies an abnormality to an external device when the predetermined movement of the subject is determined to indicate the abnormality; and
a terminal device communicatively connected with the subject observation unit to perform an output upon receipt of the abnormality notified by the subject observation unit.
